# EUROPEAN PATENT SPECIFICATION

(11) **EP 4 347 340 B1**
(45) Date of publication and mention of the grant of the patent: **23.09.2026**
(21) Application number: 22738073.0
(22) Date of filing: 25.05.2022
(51) Int. Cl.: B60V 3/06, B63B 1/38, F16J 15/02, F16J 15/3208, F16J 15/3212

(54) **FLAP SEALING MEMBERS FOR AN AIR SUPPORTED VESSEL**
KLAPPENDICHTUNGSELEMENTE FÜR EIN LUFTUNTERSTÜTZTES WASSERFAHRZEUG
ÉLÉMENTS D'ÉTANCHÉIFICATION DE VOLET POUR BATEAU AÉROPORTÉ

(30) Priority: 26.05.2021 NO 20210673
(43) Date of publication of application: 10.04.2024
(73) Proprietor: PASCAL TECHNOLOGIES AS, 0278 Oslo (NO)
(72) Inventor: LIVGÅRD, Tor Kolbjørn, 3229 Sandefjord (NO)
(74) Representative: Acapo Onsagers AS
(86) International application number: PCT/NO2022/050119
(87) International publication number: WO 2022/250545

(56) References cited:
- GB-A- 1 001 058
- KR-B1- 101 255 134

## Description

The present invention is related to a flap for an air supported vessel which is provided with an exterior hull recess at the bottom of the hull for an air cushion, an air supported vessel comprising such a flap and a use of the flap for regulation of an air cushion on an air supported vessel.

Air cushioned vessels are known, such as surface-effect ships (SES), which combine features from hovercraft and catamaran hull design. There is also known a catamaran vessel from US6672234 which includes an air cushion arranged in each of the hulls of the vessel. The air cushions, however, cover a relatively small area of the horizontal projection of each hull of the catamaran vessel.

From a early article "U. S. Tudem, T. K. Livgård, Air Supported Vessel ( ASV ) Monohull Demonstrator. Design development , testing at sea and results proving the Concept, IX HSMV Naples 25 - 27 May 2011", it is shown a flap for an air supported vessel with a hull which is provided with an exterior hull recess at the bottom of the hull for an air cushion. Also from different executions of an air supported vessel, as shown in the swedish patent SE 426043 B, the Korean patent KR101255134B1 or the Amercan patent US 3027860 A, it is discussed loss/escape of air and mostly at the aft part of the air cushion, i.e. at the enclosure flap. In order to reduce air loss/escape, efficient sealing at the flaps is necessary, as suggested in documents. KR101255134B1 discloses a flap according to the preamble of claim 1.

An objective of the present invention has been to improve the efficiency of air supported vessels.

A further objective has been to effectively regulate the air cushion of air supported vessels.

A further objective has been to reduce undesired loss of air from the air cushion recess.

A further objective has been to obtain an air supported vessel with less need for maintainance.

A further objective has been to minimize energy losses of air supported vessels comprising a flap device or a similar device to regulate the air cushion.

These objectives are met with a flap for an air supported vessel as defined in independent claim 1, an air supported vessel as defined in claim 13 and a use of the flap defined in claim 15 for regulation of an air cushion on an air supported vessel.

Hence, there is provided a flap (22) for an air supported vessel (10) with a hull (12) which is provided with an exterior hull recess (14) at the bottom of the hull for an air cushion, the hull recess (14) extending in a longitudinal direction of the hull (12), where the hull recess (14) is open in a rearward direction of the hull and comprises a first sidewall (16) and a second sidewall (18), where a rear portion (15) of the hull recess (14) is adapted for mounting of at least one flap (12) which has a forward sideedge (28), a rear sideedge (25), a first sideedge (23) and a second sideedge (24), wherein
the flap (22) comprises at least one first sealing member (36) arranged at the first sideedge (23) of the flap (22),
the flap (22) comprises at least one second sealing member (46) arranged at the second sideedge (24) of the flap (22),
the first sealing member (36) extends along the full length of the first sideedge (23) of the flap (22) and is adapted to contact the first sidewall (16) of the hull recess (14) in a fluid tight manner, and
the second sealing member (46) extends along the full length of the second sideedge (24) of the flap (22) and is adapted to contact the second sidewall (18) of the hull recess (14) in a fluid tight manner, wherein the first sealing member (36) is slideably arranged in a first groove (30) in the first sideedge (23) of the flap (22), and wherein the second sealing member (46) is slideably arranged in a second groove (33) in the second sideedge (24) of the flap (22), so as for enabling adjustment of a position of the first sealing member (36) and the second sealing member (46) relative to the flap (22) and the first sidewall (16) of the hull recess (14) and the second sidewall (18) of the hull recess (14) respectively, the first sealing member (36) and the second sealing member (46) movable in a transverse direction of the flap (22) relative to the longitudinal direction of the vessel (10) and the flap (22), so as for enabling adjustment of a position of the first sealing member (36) and the second sealing member (46) relative to the flap (22) and the first sidewall (16) of the hull recess (14) and the second sidewall (18) of the hull recess (14) respectively, the first sealing member (36) and the second sealing member (46) movable in a transverse direction of the flap (22) relative to the longitudinal direction of the vessel (10) and the flap (22).

The air cushion of the vessel is formed within the hull recess which is delimited by a first sidewall and a second sidewall, which are joined in a bow portion of the hull recess and forms a forward and laterally closed hull recess The hull recess is open in a rearward direction but the at least one flap is arranged across a rear portion of the hull recess and is rotatably mounted to the hull within the hull recess and thereby closing the hull recess also in the rearward direction to a desired degree, from completely closed to completely open and any desired position therebetween. The first sealing member and the second sealing member reduces the leakage of air from the air cushion in the rearward direction to a minimum thereby enhancing the efficiency of the vessel.

The vessel may be considered to be a combination of a catamaran and a monohull, gaining the advantages from both. Increased comfort and incomparable seakeeping capabilities are some of the benefits of a vessel according to the present invention. Furthermore, the present invention is compatible with conventional propulsion systems such as propeller pods extending downwardly from the starboard and port bottom portions at either sides of the recess.

The solution is essentially a regular V-shaped hull, with a hollow bottom section, a rear enclosing flap and an air fan in the bow. Compared to regular SES technology, the technical solution of the present invention does not include any problematic and high-maintenance, flexible skirt enclosing the cushion. Compared to hydrofoils, the present invention is simpler, safer and more robust. Off-cushion, the vessel operates essentially as a regular monohull.

The vessel is lifted out of the water by activating the rear flap and inflating the air cushion. While running on the air cushon, the vessel has a very low draft, which reduces wake wash - often being a problem in protected/inland waters

The air cushion acts as an air damper, improving comfort by less wave-induced motions, enables higher speed in rough waters.

The first sealing member is preferably slideably arranged in a first groove in the first sideedge of the flap, and the second sealing member is preferably slideably arranged in a second groove in the second sideedge of the flap. This enables the adjustment of the position of the first sealing member and the second sealing member relative to the flap and to the first sidewall of the hull recess and the second sidewall of the hull recess respectively. The first sealing member and the second sealing member are thus movable in a transverse direction of the flap relative to the longitudinal direction of the vessel and the flap, i.e. towards (and away from) the first sidewall and the second side wall of the hull recess.

The first sealing member is preferably spring biased towards the first sidewall of the hull recess, and the second sealing member is preferably spring biased towards the second sidewall of the hull recess. When the first sealing member and the second sealing member are spring biased, i.e. they are pressed, towards the first sidewall and the second sidewall of the hull recess, a tighter and continuous sealing position towards the first sidewall and the second sidewall can be maintain regardless of the movements of the at least one flap.

The at least one first spring element is preferably arranged in the first groove such that the first sealing member is urged or pressed towards the first sidewall of the hull recess, and the at least one second spring element is preferably arranged in the second groove such that the second sealing member is urged or pressed towards the second sidewall of the hull recess. Arranging the at least one first spring element in the first groove and the at least one second spring element in the second groove, i.e. between the first sealing member and the flap and between the second sealing member and the flap, ensures that the at least one first spring element and the at least one second spring element are securely kept in their positions and effectively urges or presses the first sealing element and the second sealing element respectively towards the first sidewall and the second side wall of the hull recess.

The at least one first spring element is preferably wave-shaped and extends in a longitudinal direction of the first groove, and the at least one second spring element is preferably also wave-shaped and extends in a longitudinal direction of the second groove. The wave-shape of the at least one first spring element and the at least one second spring element may have a sinusoidal shape or take the shape of any other wave form as long as the at least one first spring element and the at least one second spring element are effectively urged or pressed towards the first sidewall and the second sidewall of the hull recess respectively, helping to ensure that an effective seal between the first sealing member and the first sidewall and between the second sealing member and the second sidewall are continuously maintained regardless of the movements of the at least one flap.

The at least one first spring element preferably extends along the entire length of the first groove or at least substantially the entire length of the first groove, and the at least one second spring element preferably extends along the entire length of the second groove, or at least substantially the entire length of the first groove. By using a wave-shaped at least one first spring element and a wave-shaped at least one second spring element which both extend along the entire length, or at least substantially the entire length, of the first groove and the second groove respectively, the first sealing member and the second sealing member are effectively urged or pressed against the first sidewall and the second sidewall of the hull recess respectively, ensuring that an effective seal between the first sealing member and the first sidewall and between the second sealing member and the second sidewall are continuously maintained regardless of the movements of the at least one flap.

In an embodiment of the invention, the at least one wave-shaped first spring element is advantageously attached to the first sealing member at a forward portion of the first sealing member, i.e. adjacent the forward edge of the flap, and the at least one wave-shaped second spring element is preferably attached to the second sealing member at a forward portion of the second sealing member, i.e. adjacent the forward edge of the flap. The at least one first spring element and the at least one second spring element can be attached to the first sealing member and the second sealing member respectively with screws, bolts or any other suitable fastening device.

In an embodiment of the invention, the first sealing member is provided with a bolt hole and a recess for a bolt head or a nut on a side of the first sealing member that faces the first sidewall of the hull recess which recess is deeper than the bolt head or the nut such that the first sealing member can be worn down without the bolt head or the nut getting in contact with the first sidewall of the hull recess causing wear on the first sidewall, and further, the second sealing member is provided with a bolt hole and a recess for a bolt head or a nut on a side of the second sealing member that faces the second sidewall of the hull recess, which recess is deeper than the bolt head or the nut such that the second sealing member can be worn down without the bolt head or the nut getting in contact with the second sidewall of the hull recess causing wear on the first sidewall.

In another emboiment, an alternative to using a wave-shaped first spring element and a wave-shaped second spring element, the at least one first spring element may comprise a plurality of first spring elements which are spaced out along the first groove of the first sideege of the flap, and the at least one second spring element may comprise a plurality of second spring elements which are spaced out along the second groove of the second sideege of the flap. The plurality of first spring elements can be ordinary, helically shaped spring elements and adapted to urge or press the first sealing member towards the first sidewall of the hull recess in the same way as the at least one wave-shaped first spring element described above. The plurality of second spring elements can be ordinary, helically shaped spring elements and adapted to urge or press the second sealing member towards the second sidewall of the hull recess in the same way as the at least one wave-shaped second spring element described above. The number of first spring elements and their stiffness and the number of second spring elements and their stiffness are preferably the same and are chosen so that the first sealing element and the second sealing element are urged or pressed towards the first sidewall and the second sidewall of the hull recess respectively with a desired pressure.

In an embodiment of the invention, the flap maybe provided with a first wear indicator which indcates the amount of wear of the first sealing member, and a second wear indicator which indcates the amount on wear of the second sealing member. The wear indicator will show when the wear on the first sealing member and the wear on the second sealing member have come to the point were the first sealing member and/or the second sealing member must be replaced.

The first wear indicator may comprise a first protruding element which is part of or mounted on the first spring element and/or the first sealing member, where the first protruding element extends though a first opening in the rear sideedge of the flap, and the second wear indicator may comprise a second protruding element which is part of or mounted on the second spring element and/or the second sealing member, where the second protruding element extends though a second opening in the rear sideedge of the flap.

As the sealing member is worn the spring will expand in its sinusoidal amplitudes along its entire length, and thus shorten. The inner end is fixed. The outer end extending as a wear indicator will thus retract as the spring shortens. Preferably, the rear side edge of the flap is provided with a first groove lid which is removable and covers the first groove, and preferably the rear side edge of the flap is provided with a second groove lid which which is removable and covers the second groove. This will allow for easy removal and replacement of the first sealing member and the second sealing member respectively when the they are worn out.

The first groove lid is preferably provided with the first opening for the first protruding element of the first wear indicator, and the second groove lid is preferably provided with the second opening for the second protruding element of the second wear indicator.

In an embodiment of the invention, the first sealing member and the second sealing member may be made of HDPE (High Density Poly Ethylene) or any other material that provides good sealing and has sufficiently low friction when it is immersed in water, and are sufficiently wear resistant.

There is also according to the invention provided an air supported vessel comprising a hull which is provided with an exterior hull recess at the bottom of the hull for an air cushion, where the hull recess extends in a longitudinal direction of the hull, and the hull recess is open in a rearward direction of the hull. The vessel further comprises a first sidewall and a second sidewall, wherein at least one flap according to any one of the embodiments described above is mounted in a rear portion of the hull recess.

In an embodiment of the invention, the hull recess may be provided with at least one partition wall which extends in the longitudinal direction of the hull recess along substantially its longitudinal length or at least along a part of its longitudinal length, and divides at least the aft portion of the hull recess into at least two hull recess partitions, and wherein each hull recess partition is provided with a flap that is provided with a first sealing member and a second sealing member which, respectively, in a fluid tight manner, contact either the first sidewall or the second sidewall and a partition wall, or two partition walls. With two or more recess partitions of the hull recess in the rearward portion of the hull recess, where the position of the flaps arranged in respective recess partitions are individually controlled, an improved control of the vessel is achieved.

In an embodiment of the inveniton, the first sidewall and the second sidewall of the hull recess may be made of HDPE (High Density Poly Ethylene), or may alternatively be provided with a layer of HDPE. If the hull recess comprises one or more recess partitions, the partition wall or partitions walls may also be made of HDPE, or alternatively be provided with a layer of HDPE. The friction between the first sealing member and the second sealing member of the flap or flaps and the first sidewall and/or the second sidewall and/or the partion wall or walls, caused by the relative movement between the first sealing member and the second sealing member of the flap or flaps and the first sidewall and/or the second sidewall and/or the partion wall or walls, will thereby be low.

However, there will be always be some friction and therefore wear on the first sidewall, the second sidewall, the first sealing member and the second sealing member due to ordinary friction but also due to any minute amounts of sand particles in the sea.

In an embodiment of the invention, the density of the HDPE of the first sidewall of the hull recess and the density of the HDPE of the first sealing member in the first groove have different densities in such a manner that the first sealing member wears out faster than the HDPE of the first sidewall of the hull recess. Also, in an embodiment of the invention, the density of the HDPE of the second sidewall of the hull recess and the density of the HDPE of the second sealing member arranged in the second groove have different densities in such a manner that the second sealing member wears out faster than the HDPE on the second sidewall of the hull recess.

**In** an embodiment of the invention, the at least one flap is preferably rotatably mounted to the hull about an axis that is generally transverse to the longitudinal direction of the hull of the vessel and the hull recess. The at least one flap can thereby be used to control the air cushion in the hull recess. The front edge, or forward edge, of the at least one flap can be mounted to the hull with at least one hinge device, or any other device that allows the at least one flap to rotate about an axis that preferably is substantially transverse to the longitudinal direction of the hull of the vessel and the hull recess.

**In** an embodiment of the invention, the first sidewall and the second sidewall of the hull recess are joined in a bow-shaped portion of the hull recess whereby the hull recess is closed in a forward direction and transversal directions of the hull recess, and the hull recess and the flap, in at least one activated position of the flap, i.e. a position where the flap is rotated at least a little out from its inactive position, in which the flap is located next to, and substantially parallell to, the bottom of the hull recess, form an enclosure for an air cushion. Since the at least one flap is preferably rotatably mounted to the hull in the hull recess, the at least one flap can be controlled to take any position relative to the hull and thereby effectively control the air cushion in the hull recess.

In an embodiment of the invention, the vessel is provided with at least one air fan or air compressor which supplies compressed air into the hull recess in order to form and replenish the air cusion. The compressed air may be injected into the front portion or bow portion of the hull recess.

The at least one flap according to any one of the embodiments described above, can be used for regulation of an air cushion on an air supported vessel, which, preferably, is provided with a monohull.

A non-limiting embodiment of the present invention will be described in the following with reference to the figures, wherein
Figure 1 shows a hull of a vessel according to the present invention where the hull is provided with a hull recess for an air cushion and a flap according to the present invention is arranged in a rear portion of the hull recess.
Figure 2 shows a port portion of the flap and the first (port) sidewall of the hull recess.
Figure 3 shows a part of the flap and the first sidewall of an aft portion of the hull recess where the upper surface of the flap, for the sake of illustration, has been removed to expose the first groove in the first sideedge of the flap and a first spring element arranged in the first groove.
Figure 4 shows a part of the flap and the second, starboard sidewall of the aft portion of the hull recess where the upper surface of the flap, for the sake of illustration, has been removed to expose the second groove in the second sideedge of the flap and a second spring element arranged in the second groove.
Figure 5 shows the same view of the flap and the second sidewall as in figure 4, but where the second groove lid has been removed.
Figure 6 shows a close-up of the flap and the first groove lid with the first groove lid opening through which a first protruding element of a first wear indicator extends, here as a free end portion of the spring element.
Figure 7 shows the flap with its top surface removed to expose the forward portion of the first sealing member and the front end portion of the first spring element, and the attachment of the first spring element to the first sealing member near the upper, forward edge of the flap.
Figure 8a-8b and 9 shows the bolt opening of the first and second sealing member for attachment of the first and second spring elements respectively to the first and second sealing member with a bolt or similar.

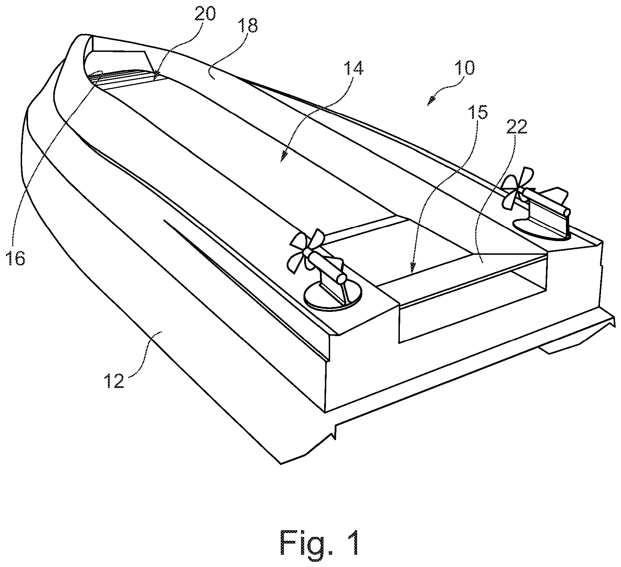

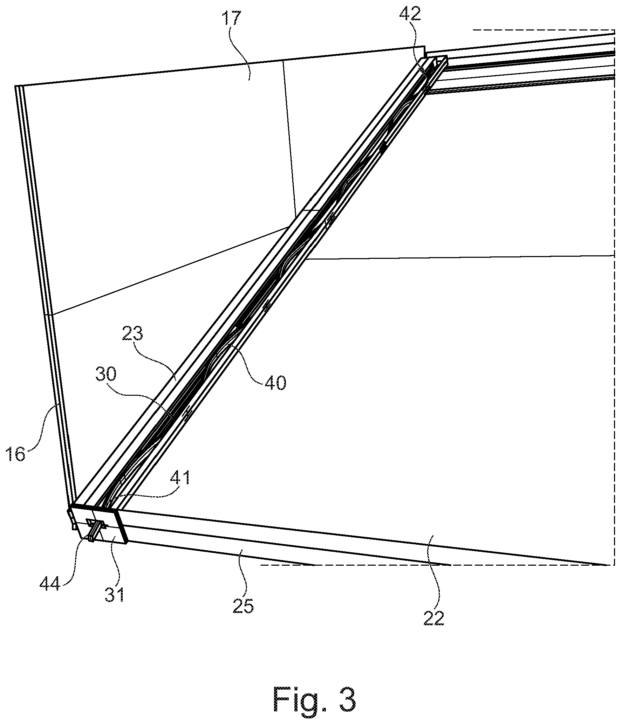

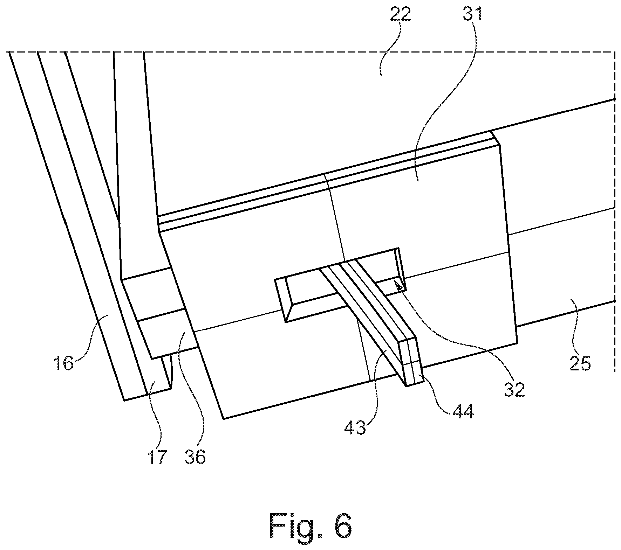

Referring to figures 1-9 there is shown an air supported vessel 10 comprising a hull 12 with a hull recess 14 as indicated in figure 1. The hull recess 14 is formed by a first sidewall 16 and a second sidewall 18. The first sidewall 16 and the second sidewall 18 are joined at a bow portion 20 of the hull recess 14. At the rear of the hull recess 14, it is open in a rearward direction of the hull 12 and the vessel 10.

The vessel 10 is further provided with one or more air fans or air compressors which is/are fluidly connected to the forward portion 20 of the hull recess 14 such that pressurized air can be blown into the hull recess 14.

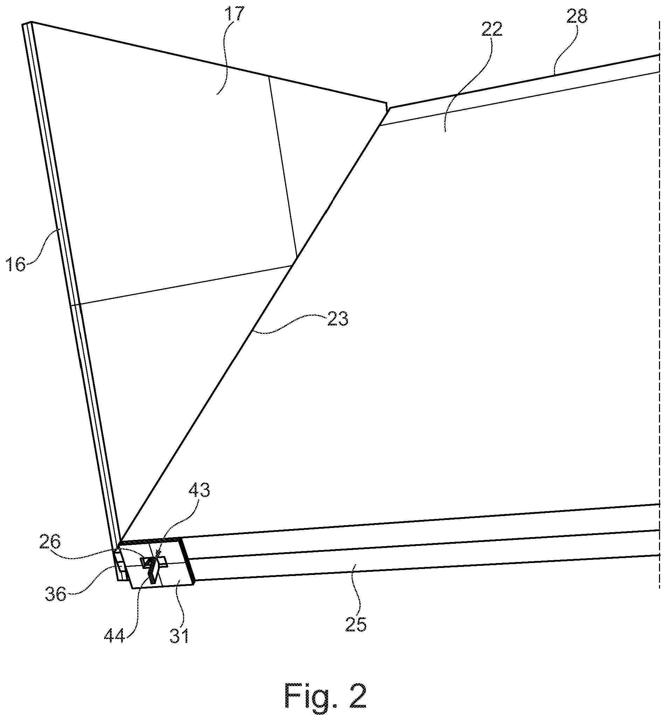

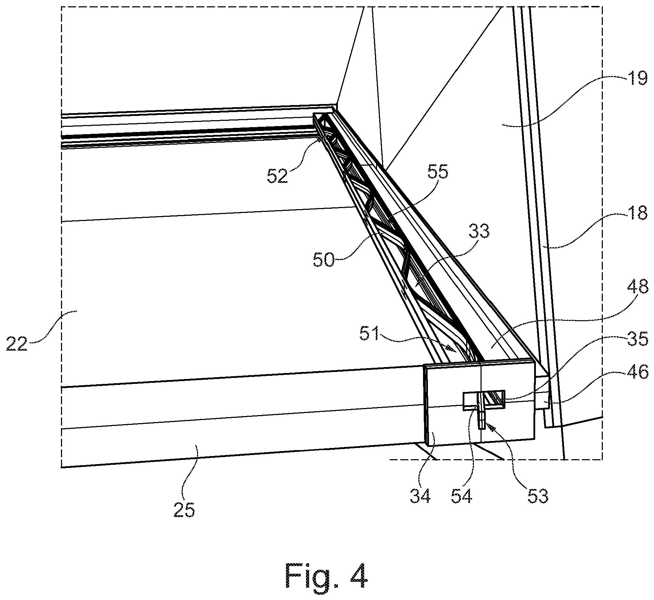

At a rear portion of the hull recess a flap 22 is arranged as illustrated in figure 1. The flap has a rear sideedge 25, a forward sideedge 28, a first sideege 23 facing the first sidewall 16 of the hull recess 14 and a second sideedge 24 facing the second sidewall 18 of the hull recess 14, please see figure 2 and Fig. 4. The forward sideedge of the flap 22 is rotatably mounted to the hull 12, in the hull recess 14, about an axis that is generally transverse to the longitudinal axis of the vessel 10, the hull 12 and the hull recess 14. The flap 22 may be rotationally mounted to the hull 12 by one or more hinge devices (not shown in the figures) or any other suitable device that will allow the flap 22 to rotate relative to the hull 12. By rotating the flap 22, the air flow through the hull recess 14 and out of hull recess in a rearward direction can be controlled. If the flap 22 is rotated outwards from the hull 12 until the rear sideedge 25 is substantially level with the outermost or lowermost part of the first sidewall 16 and the outermost or lowermost part of the second sidewall 18 of the hull recess, an enclosure for the air cushion is formed.

In an embodiment of the invention, the rear portion 15 of the hull recess 14 is provided with one or more partition walls (not shown in the figures) which divides the hull recess 14 into two or more partitions, at least at the aft portion of the recess 14. In each partition a flap as described in more detail above and below is mounted to the hull 12 rotatable relative to the hull about an axis that is transverse to the longitudinal axis of the vessel 10, the hull 12 and the hull recess 14. The plurality of flaps 22 can, in an embodiment, be rotatated independently of each other enabling a an improved control of the air flow through the hull recess 14 when the vessel 10 is operational, as compared to a single flap.

The gap between the at least one flap 22 and the first sidewall 16 of the hull recess 14 and the gap between the second sealing member 46 and the second sidewall 18 of the hull recess 14 are sealed in a substantially identical but inverted or mirrored way, i.e. the design of the port and starboard directed portions of the flap are, in an embodiment, generally symmetrical.

To seal the gap between the flap 22 and the first sidewall 16 of the hull recess 14, the flap 22 is provided with a first sealing member 36 which is arranged in a first groove 30 in the first sideedge 23 of the flap 22.

The first sealing member 36 is preferably made of HDPE (High Density Poly Ethylene), but may of course be made of any other suitable material that provides the right combination of low friction and wear resistance. Likewise, the first sidewall 16 of the hull recess 14 is preferably also made of HDPE, or may alternatively be provided with a layer or plate 17 made of HDPE. If the hull recess 14 comprises one or more recess partitions, the partition wall or partitions walls are preferably also made of HDPE, or alternatively provided with a layer or plate of HDPE. The friction between the first sealing member or sealing members 36 of the flap or flaps 22 and the first sidewall 16, 17 or a partion wall or walls, caused by the relative movement between the first sealing member or sealing members 36 of the flap or flaps 22 and the first sidewall 16, 17 and/or the partion wall or walls, will thereby be low.

However, there will be always be some friction and particle abrasion and therefore wear on the first sidewall 16, 17 and the first sealing member 36.

Preferably, the density of the HDPE of the first sidewall 36 of the hull recess 14 and the density of the HDPE of the first sealing member 36 arranged in the first groove 30 have different densities in such a manner that the first sealing member 36 wears faster than the HDPE on the first sidewall 16, 17 of the hull recess 14.

The first sealing member 36 may, in an embodiment, be arranged slidingly in the first groove 30 in a direction towards and away from the first sidewall 16, 17. To ensure a good sealing between the first sealing member 36 and the first sidewall 16, 17 of the hull recess 14, i.e. that substantially no air, or at least comparatively very little air, escapes through the gap between the first sealing member 36 and the first sidewall 16, 17, the first sealing member 36 is springbiased towards the first sidewall 16, 17. This will in practical terms eliminate the gap between the first sealing element 36 and the first sidewall 16, 17, or at least reduce the gap to a width which is insignificantly small.

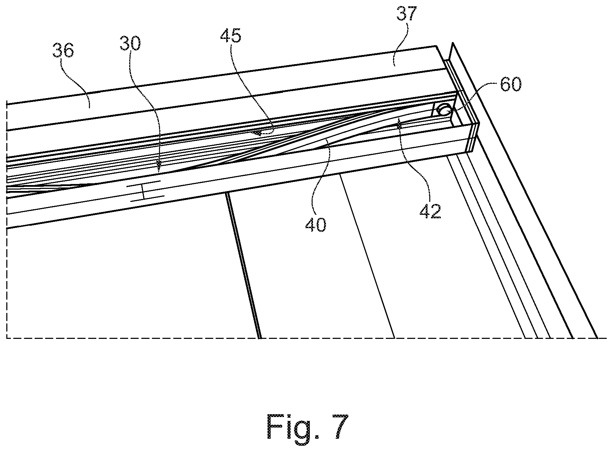

To obtain the spring bias of the first sealing member 36 against the first sidewall 16, 17 of the hull recess 14, at least one first spring element 40 may, in an embodiment, be arranged in the first groove 30, as shown in figure 7, between the first sealing member 36 and the bottom of the first groove 30. The at least one spring element 40 urges or presses the first sealing member 36 in a direction out of the first groove 30 and towards the first sidewall 16, 17 such that the first sealing member 36 is contacting the first sidewall 16, 17 in a fluid tight manner, or at least in a substantially fluid tight manner.

The first spring element 40 is advantageously a wave-shaped spring, for example a sinusoidally shaped spring, which has a spring stiffness that will urge or press the first sealing member 36 towards the first sidewall 16, 17 with a sufficiently large force or pressure to obtain a fluid tight, or at least a substantially fluid tight, connection between the first sealing member 36 and the first sidewall 16, 17.

The first spring element 40 and the second spring element 50 are both securely attached in the same manner to the first sealing member 36 and the second sealing member 46 respectively. The first spring element 40 and the second spring element 50 may, in an embodiment, be attached to the first sealing member 36 and the second sealing member 46 with a bolt 60 as indicated in figure 7. The first sealing member 36 and the second sealing member 46 are preferably provided with a first sealing member groove 45 and a second sealing member groove 55 respectively, in which the "crests" of the wave-shaped first spring element 40 and the second spring element 50 are arranged and which act as guiding grooves for the "crests" of the first spring element 40 and the second spring element 50 when they are compressed or relaxed.

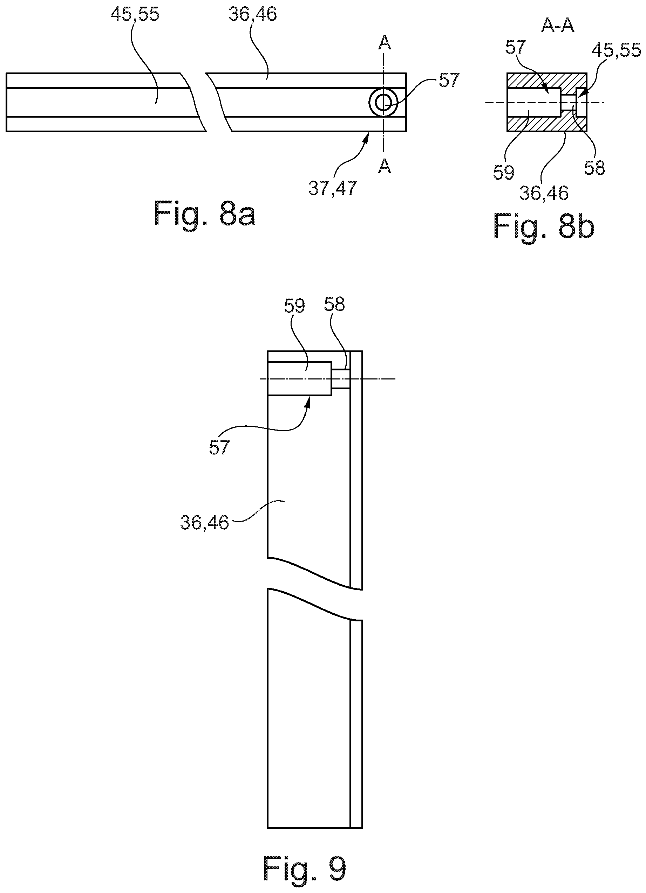

The first sealing member 36 and the second sealing member 46 may both, in an embodiment, be provided with a bolt opening 57 for respective bolts 60 as shown in figures 8a-b and 9. The bolt opening 57 is through-going and comprises two sections, a bolt hole 58 for the bolt 60 and a bolt head recess 59 for a bolt head or nut. The bolt head recess has, as shown in figures 8b and 9, a larger diameter than the bolt hole 58 and is deeper than the height of the nut or the bolt head which is placed in the bolt head recess 59. In that way, the first sealing member 36 and the second sealing member 46 can be worn without the bolt head or the nut arranged in the bolt head recess 59 contacting the first sidewall 16, 17 or the second side wall 18, 19 of the hull recess 14 respectively.

The flap 22 may, in an embodiment, be provided with first wear indicator 43. The first wear indicator 43 is adapted to indicate how much the first sealing member 36 has been worn down at any given time so that the first sealing member 36 can be replaced with a new sealing member 36 when that is necessary.

The first wear indicator 43 preferably comprises a first protruding element 44 which extends out of a first opening 26 in the rear sideedge 25 of the flap 22. The first opening 26 is a result of the of the first groove 30 of the flap 22 being open at the end towards the rear sideedge 25 of the flap 22. The first opening 26 allows the first sealing member 36 and the at least one first spring element 40 to be inserted into the first groove 30 and to be removed from the first groove 30. The flap 22 is preferably also provided with a first groove lid 31 which covers the first opening 26. When the first sealing member 36 is worn out, it can easily be replaced by removing the first groove lid 31, removing the wornout first sealing member 36, inserting a new first sealing member 36 and finally attaching the first groove lid 31 back onto the rear sideedge 25 of the flap 22. If the new first sealing member 36 is not provided with the at least one first spring element 40, the at least one first spring element 40 is detached/unbolted from the wornout first sealing member 36 and then attached/bolted to the new first sealing member 36 before it is inserted into the first groove 30.

The first protruding element 44 may, in an embodiment, be attached to the first sealing member 36 and extends through and protrudes out from the first groove lid opening 32, and will gradually move closer to the side of the the first groove lid opening 32 facing the first sidewall 16, 17 as the first sealing member 36 gradually gets worn down by the relative movements between the first sealing member 36 and the first sidewall 16, 17. Preferably, the first protruding element 44 is formed by an end portion of the first spring element 40 which protrudes out of the first groove lid opening 32, but may of course alternatively be made of a separate element that is attached to the first sealing member 36. When the first protruding element 44 reaches a certain position within the first groove lid opening 32, usually adjacent said side of the first groove lid opening 32, it is a sign that the first sealing member 36 is worn out and needs to be replaced.

At the opposite side of the at least one flap 22, in order to seal the gap between the flap 22 and the second sidewall 18 of the hull recess 14, the flap 22 is provided with a second sealing member 46 which is arranged in a second groove 33 in the second sideedge 24 of the flap 22.

The second sealing member 46 is preferably made of HDPE (High Density Poly Ethylene), but may of course be made of any other suitable material that provides the right combination of low friction and wear resistance. The second sidewall 18 of the hull recess 14 is preferably also made of HDPE, or may alternatively be provided with a layer or plate 19 made of HDPE. If the hull recess 14 comprises one or more recess partitions, the partition wall or partitions walls are preferably also made of HDPF, or alternatively provided with a layer or plate of HDPE. The friction between the second sealing member or sealing members 46 of the flap or flaps 22 and the second sidewall 18, 19 or a partion wall or walls, caused by the relative movement between the second sealing member or sealing members 46 of the flap or flaps 22 and the second sidewall 18, 19 and/or the partion wall or walls, will thereby be reduced to a minimum.

However, there will be always be some friction and therefore wear on the second sidewall 18, 19 and the second sealing member 46. Also, preferably, the density of the HDPE of the second sidewall 18, 19 of the hull recess 14 and the density of the HDPE of the second sealing member 46 arranged in the second groove 33 have different densities in such a manner that the second sealing member 46 wears out instead of the HDPE on the second sidewall of the hull recess.

The second sealing member 46 may, in an embodiment, be arranged slidingly in the second groove 33 in a direction towards and away from the second sidewall 18, 19. To ensure a good sealing between the second sealing member 46 and the second sidewall 18, 19 of the hull recess 14, i.e. that little or no air escape through the gap between the second sealing member 46 and the second sidewall 18, 19, the second sealing member 46 is springbiased towards the second sidewall 18, 19. This will eliminate or at least significantly reduce the gap between the second sealing member 46 and the second sidewall 18, 19.

To obtain the springbias of the second sealing member 46 against the second sidewall 18, 19 of the hull recess 14, at least one second spring element 50 is arranged in the second groove 33, between the second sealing member 46 and the bottom of the second groove 33. The at least one spring element 40 urges or presses the second sealing member 46 in a direction out of the second groove 33 and towards the second sidewall 18, 19 such that the second sealing member 46 is contacting the second sidewall 18, 19 in a fluid tight manner, or at least in a substantially fluid tight manner.

The second spring element 50 is preferably a wave-shaped spring which has a spring stiffness that will urge or press the second sealing member 46 towards the second sidewall 18, 19 with a sufficiently large force or pressure to obtain a fluid tight, or at least a substantially fluid tight, connection between the second sealing member 46 and the second sidewall 18, 19.

The flap 22 is further preferably provided with second wear indicator 53. The second wear indicator 53 is adapted to indicate how much the second sealing member 46 has been worn down at any given time so that the second sealing member 46 can be replaced with a new sealing member 36 when that is necessary.

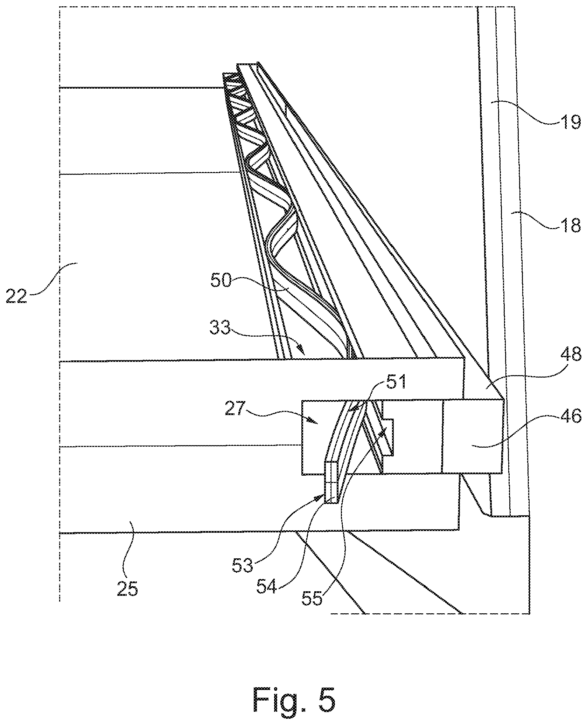

The second wear indicator 53 may, in an embodiment, be comprises a second protruding element 54 which extends out of a second opening 27 in the rear sideedge 25 of the flap 22, as shown in figure 5. The second opening 27 is a result of the of the second groove 33 of the flap 22 being open at the end towards the rear sideedge 25 of the flap 22. The second opening 27 allows the second sealing member 46 and the at least one second spring element 50 to be inserted into the second groove 33 and to be removed from the second groove 33. The flap 22 is preferably also provided with a second groove lid 34 which covers the second opening 27. When the second sealing member 46 is worn out, it can easily be replaced by removing the second groove lid 34, removing the wornout second sealing member 46, inserting a new second sealing member 46 and finally attaching the second groove lid 34 back onto the rear sideedge 25 of the flap 22. If the new second sealing member 46 is not provided with the at least one second spring element 50, the at least one second spring element 50 is detached/unbolted from the wornout second sealing member 46 and then attached/bolted to the new second sealing member 46 before it is inserted into the second groove 33.

The second protruding element 54 is attached to the second sealing member 46 and extends through and protrudes out from the second groove lid opening 35, and will gradually move closer to the side of the the second groove lid opening 35 facing the second sidewall 18, 19 as the second sealing member 46 gradually gets worn down by the relative movements between the second sealing member 46 and the second sidewall 18, 19. Preferably, the second protruding element 54 is formed by an end portion of the second spring element 50 which protrudes out of the second groove lid opening 35, but may of course alternatively be made of a separate element that is attached to the second sealing member 46. When the second protruding element 54 reaches a certain position within the second groove lid opening 35, usually adjacent said side of the second groove lid opening 35, it is a sign that the second sealing member 46 is worn out and needs to be replaced.

## Claims

1. A flap (22) for an air supported vessel (10) with a hull (12) which is provided with an exterior hull recess (14) at the bottom of the hull for an air cushion, the hull recess (14) extending in a longitudinal direction of the hull (12), where the hull recess (14) is open in a rearward direction of the hull and comprises a first sidewall (16) and a second sidewall (18), where a rear portion (15) of the hull recess (14) is adapted for mounting of at least one flap (22) which has a forward sideedge (28), a rear sideedge (25), a first sideedge (23) and a second sideedge (24), wherein
the flap (22) comprises at least one first sealing member (36) arranged at the first sideedge (23) of the flap (22),
the flap (22) comprises at least one second sealing member (46) arranged at the second sideedge (24) of the flap (22),
the first sealing member (36) extends along the full length of the first sideedge (23) of the flap (22) and is adapted to contact the first sidewall (16) of the hull recess (14) in a fluid tight manner, and the second sealing member (46) extends along the full length of the second sideedge (24) of the flap (22) and is adapted to contact the second sidewall (18) of the hull recess (14) in a fluid tight manner, **characterised in that** the first sealing member (36) is slideably arranged in a first groove (30) in the first sideedge (23) of the flap (22), and the second sealing member (46) is slideably arranged in a second groove (33) in the second sideedge (24) of the flap (22), so as for enabling adjustment of a position of the first sealing member (36) and the second sealing member (46) relative to the flap (22) and the first sidewall (16) of the hull recess (14) and the second sidewall (18) of the hull recess (14) respectively, the first sealing member (36) and the second sealing member (46) being movable in a transverse direction of the flap (22) relative to the longitudinal direction of the vessel (10) and the flap (22).

2. The flap according to claim 1,
wherein the first sealing member (36) is spring biased towards the first sidewall (16) of the hull recess (14), and wherein the second sealing member (46) is spring biased towards the second sidewall (18) of the hull recess (14).

3. The flap according to claim 1 or to claim 2 when dependent on claim 1, wherein at least one first spring element (40) is arranged in the first groove (30) such that the first sealing member (36) is urged towards the first sidewall (16) of the hull recess (14), and wherein at least one second spring element (50) is arranged in the second groove (33) such that the second sealing member (46) is urged towards the second sidewall (18) of the hull recess (14).

4. The flap according to 3,
wherein the at least one first spring element (40) is wave-shaped and extends in a longitudinal direction of the first groove (30), and wherein the at least one second spring element (50) is wave-shaped and extends in a longitudinal direction of the second groove (33).

5. The flap according to claim 4,
wherein the at least one first spring element (40) extends along the entire length of the first groove (30), and wherein the at least one second spring element (50) extends along the entire length of the second groove (33).

6. The flap according to claim 4 or 5,
wherein the wave-shaped first spring element (40) is attached to the first sealing member (36) at a forward portion (37) of the first sealing member (36), and wherein the the wave-shaped second spring element (50) is attached to the second sealing member (46) at a forward portion (47) of the second sealing member (46).

7. The flap according to claim 6,
wherein the first sealing member (36) is provided with a bolt opening (57) with a bolt hole (58) and a bolt head recess (59) for a bolt head or a nut on a side of the first sealing member (36) that faces the first sidewall (16) of the hull recess (14) which bolt head recess (59) is deeper than the bolt head or the nut such that the first sealing member (36) can be worn down without the bolt head or the nut getting in contact with the first sidewall (16) of the hull recess (14), and wherein the second sealing member (46) is provided with a bolt opening (57) with a bolt hole (58) and a bolt head recess (59) for a bolt head or a nut on a side of the second sealing member (46) that faces the second sidewall (18) of the hull recess (14), which bolt head recess (59) is deeper than the bolt head or the nut such that the second sealing member (46) can be worn down without the bolt head or the nut getting in contact with the second sidewall (18) of the hull recess (14).

8. The flap according to any one of claims 1-7,
wherein the flap (22) is provided with a first wear indicator (43) which indcates the amount of wear of the first sealing member (36), and a second wear indicator (53) which indcates the amount on wear of the second sealing member (46).

9. The flap according to claim 8,
wherein the first wear indicator (43) comprises a first protruding element (44) which is part of or mounted on the first spring element (40) and/or the first sealing member (36), the first protruding element (44) extending though a first opening (26, 32) in the rear sideedge (25) of the flap (22), and wherein the second wear indicator (53) comprises a second protruding element (54) which is part of or mounted on the second spring element (50) and/or the second sealing member (46), the second protruding element (54) extending though a second opening (27, 35) in the rear sideedge (25) of the flap (22).

10. The flap according to any one of the claims 1-9,
wherein the rear side edge (25) of the flap is provided with a first groove lid (31) which is removable and covers the first groove (30), and wherein the rear side edge (25) of the flap is provided with a second groove lid (34) which which is removable and covers the second groove (33).

11. The flap according to claim 10,
wherein the first groove lid (31) is provided with a first groove lid opening (32) for the first protruding element (44) of the first wear indicator (43), and wherein the second groove lid (34) is provided with a second groove lid opening (35) for the second protruding element (54) of the second wear indicator (53).

12. The flap according to any one of claims 1-11,
wherein the first sealing member (36) and the second sealing member (46) are both made of **HDPE** (High Density Poly Ethylene).

13. An air supported vessel (10) comprising a hull (12) which is provided with an exterior hull recess (14) at the bottom of the hull for an air cushion, the hull recess (14) extending in a longitudinal direction of the hull (12), the hull recess (14) being open in a rearward direction of the hull (12) and comprising a first sidewall (16) and a second sidewall (18), wherein at least one flap (22) according to any one of the claims 1-12 is mounted in a rear portion (15) of the hull recess (14).

14. The vessel according to claim 13,
wherein the hull recess (14) is provided with at least one partition wall which extends in the longitudinal direction of the hull recess (14) along at least a part of the hull recess (14) and at least partly divides the hull recess (14) into at least two hull recess partitions, and wherein each hull recess partition is provided with a flap (22) that is provided with a first sealing member (36) and a second sealing member (46) which, respectively, in a fluid tight manner, contact either the first sidewall (16) or the second sidewall (18) and a partition wall, or two partition walls.

15. Use of a flap (22) according to any one of the claims 1-12, for regulation of an air cushion on an air supported vessel (10).

## Patentansprüche

1. Klappe (22) für ein luftunterstütztes Wasserfahrzeug (10) mit einem Rumpf (12), der mit einer äußeren Rumpfaussparung (14) am Boden des Rumpfes für ein Luftkissen versehen ist, wobei sich die Rumpfaussparung (14) in einer Längsrichtung des Rumpfes (12) erstreckt, wobei die Rumpfaussparung (14) in einer Rückwärtsrichtung des Rumpfes offen ist und eine erste Seitenwand (16) und eine zweite Seitenwand (18) umfasst, wobei ein hinterer Abschnitt (15) der Rumpfaussparung (14) für die Montage mindestens einer Klappe (22) ausgelegt ist, die eine vordere Seitenkante (28), eine hintere Seitenkante (25), eine erste Seitenkante (23) und eine zweite Seitenkante (24) aufweist, wobei
die Klappe (22) mindestens ein erstes Dichtungselement (36) umfasst, das an der ersten Seitenkante (23) der Klappe (22) angeordnet ist,
die Klappe (22) mindestens ein zweites Dichtungselement (46) umfasst, das an der zweiten Seitenkante (24) der Klappe (22) angeordnet ist,
das erste Dichtungselement (36) sich entlang der vollen Länge der ersten Seitenkante (23) der Klappe (22) erstreckt und dazu ausgelegt ist, die erste Seitenwand (16) der Rumpfaussparung (14) fluiddicht zu berühren, und das zweite Dichtungselement (46) sich entlang der vollen Länge der zweiten Seitenkante (24) der Klappe (22) erstreckt und dazu ausgelegt ist, die zweite Seitenwand (18) der Rumpfaussparung (14) fluiddicht zu berühren,
**dadurch gekennzeichnet, dass** das erste Dichtungselement (36) in einer ersten Nut (30) in der ersten Seitenkante (23) der Klappe (22) verschiebbar angeordnet ist und das zweite Dichtungselement (46) in einer zweiten Nut (33) in der zweiten Seitenkante (24) der Klappe (22) verschiebbar angeordnet ist, um so eine Einstellung einer Position des ersten Dichtungselements (36) und des zweiten Dichtungselements (46) relativ zu der Klappe (22) und der ersten Seitenwand (16) der Rumpfaussparung (14) bzw. der zweiten Seitenwand (18) der Rumpfaussparung (14) zu ermöglichen, wobei das erste Dichtungselement (36) und das zweite Dichtungselement (46) in einer Querrichtung der Klappe (22) relativ zu der Längsrichtung des Wasserfahrzeugs (10) und der Klappe (22) beweglich sind.

2. Klappe nach Anspruch 1,
wobei das erste Dichtungselement (36) hin zu der ersten Seitenwand (16) der Rumpfaussparung (14) federvorgespannt ist und wobei das zweite Dichtungselement (46) hin zu der zweiten Seitenwand (18) der Rumpfaussparung (14) federvorgespannt ist.

3. Klappe nach Anspruch 1 oder nach Anspruch 2, wenn abhängig von Anspruch 1, wobei mindestens ein erstes Federelement (40) in der ersten Nut (30) angeordnet ist, sodass das erste Dichtungselement (36) hin zu der ersten Seitenwand (16) der Rumpfaussparung (14) gedrängt wird, und wobei mindestens ein zweites Federelement (50) in der zweiten Nut (33) angeordnet ist, sodass das zweite Dichtungselement (46) hin zu der zweiten Seitenwand (18) der Rumpfaussparung (14) gedrängt wird.

4. Klappe nach 3,
wobei das mindestens eine erste Federelement (40) wellenförmig ist und sich in einer Längsrichtung der ersten Nut (30) erstreckt und wobei das mindestens eine zweite Federelement (50) wellenförmig ist und sich in einer Längsrichtung der zweiten Nut (33) erstreckt.

5. Klappe nach Anspruch 4,
wobei das mindestens eine erste Federelement (40) sich entlang der gesamten Länge der ersten Nut (30) erstreckt und wobei das mindestens eine zweite Federelement (50) sich entlang der gesamten Länge der zweiten Nut (33) erstreckt.

6. Klappe nach Anspruch 4 oder 5,
wobei das wellenförmige erste Federelement (40) an einem vorderen Abschnitt (37) des ersten Dichtungselements (36) an dem ersten Dichtungselement (36) angebracht ist und wobei das wellenförmige zweite Federelement (50) an einem vorderen Abschnitt (47) des zweiten Dichtungselements (46) an dem zweiten Dichtungselement (46) angebracht ist.

7. Klappe nach Anspruch 6,
wobei das erste Dichtungselement (36) mit einer Bolzenöffnung (57) mit einem Bolzenloch (58) und einer Bolzenkopfaussparung (59) für einen Bolzenkopf oder eine Mutter auf einer Seite des ersten Dichtungselements (36), die der ersten Seitenwand (16) der Rumpfaussparung (14) zugewandt ist, versehen ist, wobei diese Bolzenkopfaussparung (59) tiefer ist als der Bolzenkopf oder die Mutter, sodass das erste Dichtungselement (36) abgenutzt werden kann, ohne dass der Bolzenkopf oder die Mutter in Kontakt mit der ersten Seitenwand (16) der Rumpfaussparung (14) kommt, und wobei das zweite Dichtungselement (46) mit einer Bolzenöffnung (57) mit einem Bolzenloch (58) und einer Bolzenkopfaussparung (59) für einen Bolzenkopf oder eine Mutter auf einer Seite des zweiten Dichtungselements (46), die der zweiten Seitenwand (18) der Rumpfaussparung (14) zugewandt ist, versehen ist, wobei diese Bolzenkopfaussparung (59) tiefer ist als der Bolzenkopf oder die Mutter, sodass das zweite Dichtungselement (46) abgenutzt werden kann, ohne dass der Schraubenkopf oder die Mutter in Kontakt mit der zweiten Seitenwand (18) der Rumpfaussparung (14) kommt.

8. Klappe nach einem der Ansprüche 1-7,
wobei die Klappe (22) mit einem ersten Verschleißindikator (43), der den Betrag des Verschleißes des ersten Dichtungselements (36) angibt, und einem zweiten Verschleißindikator (53), der den Betrag des Verschleißes des zweiten Dichtungselements (46) angibt, versehen ist.

9. Klappe nach Anspruch 8,
wobei der erste Verschleißindikator (43) ein erstes vorstehendes Element (44) umfasst, das Bestandteil des ersten Federelements (40) und/oder des ersten Dichtungselements (36) oder daran montiert ist, wobei sich das erste vorstehende Element (44) durch eine erste Öffnung (26, 32) in der hinteren Seitenkante (25) der Klappe (22) erstreckt, und wobei der zweite Verschleißindikator (53) ein zweites vorstehendes Element (54) umfasst, das Bestandteil des zweiten Federelements (50) und/oder des zweiten Dichtungselements (46) oder daran montiert ist, wobei sich das zweite vorstehende Element (54) durch eine zweite Öffnung (27, 35) in der hinteren Seitenkante (25) der Klappe (22) erstreckt.

10. Klappe nach einem der Ansprüche 1-9,
wobei die hintere Seitenkante (25) der Klappe mit einem ersten Nutdeckel (31) versehen ist, der abnehmbar ist und die erste Nut (30) abdeckt, und wobei die hintere Seitenkante (25) der Klappe mit einem zweiten Nutdeckel (34) versehen ist, der abnehmbar ist und die zweite Nut (33) abdeckt.

11. Klappe nach Anspruch 10,
wobei der erste Nutdeckel (31) mit einer ersten Nutdeckelöffnung (32) für das erste vorstehende Element (44) des ersten Verschleißindikators (43) versehen ist und wobei der zweite Nutdeckel (34) mit einer zweiten Nutdeckelöffnung (35) für das zweite vorstehende Element (54) des zweiten Verschleißindikators (53) versehen ist.

12. Klappe nach einem der Ansprüche 1-11,
wobei das erste Dichtungselement (36) und das zweite Dichtungselement (46) beide aus HDPE (Polyethylen hoher Dichte) hergestellt sind.

13. Luftunterstütztes Wasserfahrzeug (10), umfassend einen Rumpf (12), der mit einer äußeren Rumpfaussparung (14) am Boden des Rumpfes für ein Luftkissen versehen ist, wobei sich die Rumpfaussparung (14) in einer Längsrichtung des Rumpfes (12) erstreckt, wobei die Rumpfaussparung (14) in einer Rückwärtsrichtung des Rumpfes (12) offen ist und eine erste Seitenwand (16) und eine zweite Seitenwand (18) umfasst, wobei mindestens eine Klappe (22) nach einem der Ansprüche 1-12 in einem hinteren Abschnitt (15) der Rumpfaussparung (14) montiert ist.

14. Wasserfahrzeug nach Anspruch 13,
wobei die Rumpfaussparung (14) mit mindestens einer Trennwand versehen ist, die sich in der Längsrichtung der Rumpfaussparung (14) entlang mindestens eines Teils der Rumpfaussparung (14) erstreckt und mindestens teilweise die Rumpfaussparung (14) in mindestens zwei Rumpfaussparungstrennwände unterteilt, und wobei jede Rumpfaussparungstrennwand mit einer Klappe (22) versehen ist, die mit einem ersten Dichtungselement (36) und einem zweiten Dichtungselement (46) versehen ist, die jeweils fluiddicht entweder die erste Seitenwand (16) oder die zweite Seitenwand (18) und eine Trennwand oder zwei Trennwände berühren.

15. Verwendung einer Klappe (22) nach einem der Ansprüche 1-12 zur Regulierung eines Luftkissens an einem luftunterstützten Wasserfahrzeug (10).

## Revendications

1. Volet (22) pour un bateau (10) aéroporté doté d'une coque (12) qui est munie d'un évidement (14) de coque extérieur au fond de la coque pour un coussin d'air, l'évidement (14) de coque s'étendant dans une direction longitudinale de la coque (12), où l'évidement (14) de coque est ouvert dans une direction arrière de la coque et comprend une première paroi latérale (16) et une seconde paroi latérale (18), où une partie arrière (15) de l'évidement (14) de coque est adaptée pour le montage d'au moins un volet (22) qui comporte un bord latéral avant (28), un bord latéral arrière (25), un premier bord latéral (23) et un second bord latéral (24),
ledit volet (22) comprenant au moins un premier élément d'étanchéification (36) agencé au niveau du premier bord latéral (23) du volet (22),
ledit volet (22) comprenant au moins un second élément d'étanchéification (46) agencé au niveau du second bord latéral (24) du volet (22),
ledit premier élément d'étanchéification (36) s'étendant sur toute la longueur du premier bord latéral (23) du volet (22) et étant adapté pour entrer en contact avec la première paroi latérale (16) de l'évidement (14) de coque d'une manière étanche aux fluides, et ledit second élément d'étanchéification (46) s'étendant sur toute la longueur du second bord latéral (24) du volet (22) et étant adapté pour entrer en contact avec la seconde paroi latérale (18) de l'évidement (14) de coque d'une manière étanche aux fluides,
**caractérisé en ce que** le premier élément d'étanchéification (36) est agencé de manière coulissante dans une première rainure (30) dans le premier bord latéral (23) du volet (22), et le second élément d'étanchéification (46) est agencé de manière coulissante dans une seconde rainure (33) dans le second bord latéral (24) du volet (22), de façon à permettre le réglage d'une position du premier élément d'étanchéification (36) et du second élément d'étanchéification (46) par rapport au volet (22) et à la première paroi latérale (16) de l'évidement (14) de coque et à la seconde paroi latérale (18) de l'évidement (14) de coque respectivement, le premier élément d'étanchéification (36) et le second élément d'étanchéification (46) étant mobiles dans une direction transversale du volet (22) par rapport à la direction longitudinale du bateau (10) et du volet (22).

2. Volet selon la revendication 1,
ledit premier élément d'étanchéification (36) étant sollicité par ressort vers la première paroi latérale (16) de l'évidement (14) de coque, et ledit second élément d'étanchéification (46) étant sollicité par ressort vers la seconde paroi latérale (18) de l'évidement (14) de coque.

3. Volet selon la revendication 1 ou la revendication 2 lorsqu'elle dépend de la revendication 1, au moins un premier élément de ressort (40) étant agencé dans la première rainure (30) de sorte que le premier élément d'étanchéification (36) soit poussé vers la première paroi latérale (16) de l'évidement (14) de coque, et au moins un second élément de ressort (50) étant agencé dans la seconde rainure (33) de sorte que le second élément d'étanchéification (46) soit poussé vers la seconde paroi latérale (18) de l'évidement (14) de coque.

4. Volet selon 3,
ledit au moins un premier élément de ressort (40) étant de forme ondulée et s'étendant dans une direction longitudinale de la première rainure (30), et ledit au moins un second élément de ressort (50) étant de forme ondulée et s'étendant dans une direction longitudinale de la seconde rainure (33).

5. Volet selon la revendication 4,
ledit au moins un premier élément de ressort (40) s'étendant sur toute la longueur de la première rainure (30), et ledit au moins un second élément de ressort (50) s'étendant sur toute la longueur de la seconde rainure (33).

6. Volet selon la revendication 4 ou 5,
ledit premier élément de ressort de forme ondulée (40) étant fixé au premier élément d'étanchéification (36) au niveau d'une partie avant (37) du premier élément d'étanchéification (36), et ledit second élément de ressort de forme ondulée (50) étant fixé au second élément d'étanchéification (46) au niveau d'une partie avant (47) du second élément d'étanchéification (46).

7. Volet selon la revendication 6,
ledit premier élément d'étanchéification (36) étant muni d'une ouverture (57) pour boulon avec un trou (58) pour boulon et un évidement (59) pour tête de boulon destiné à une tête de boulon ou un écrou sur un côté du premier élément d'étanchéification (36) qui fait face à la première paroi latérale (16) de l'évidement (14) de coque, lequel évidement (59) pour tête de boulon est plus profond que la tête de boulon ou l'écrou de sorte que le premier élément d'étanchéification (36) puisse être usé sans que la tête de boulon ou l'écrou n'entre en contact avec la première paroi latérale (16) de l'évidement (14) de coque, et ledit second élément d'étanchéification (46) étant muni d'une ouverture (57) pour boulon avec un trou (58) pour boulon et un évidement (59) pour tête de boulon destiné à une tête de boulon ou un écrou sur un côté du second élément d'étanchéification (46) qui fait face à la seconde paroi latérale (18) de l'évidement (14) de coque, lequel évidement (59) pour tête de boulon est plus profond que la tête de boulon ou l'écrou de sorte que le second élément d'étanchéification (46) puisse être usé sans que la tête de boulon ou l'écrou n'entre en contact avec la seconde paroi latérale (18) de l'évidement (14) de coque.

8. Volet selon l'une quelconque des revendications 1 à 7,
ledit volet (22) étant muni d'un premier indicateur d'usure (43) qui indique la quantité d'usure du premier élément d'étanchéification (36), et d'un second indicateur d'usure (53) qui indique la quantité d'usure du second élément d'étanchéification (46).

9. Volet selon la revendication 8,
ledit premier indicateur d'usure (43) comprenant un premier élément saillant (44) qui fait partie du premier élément de ressort (40) et/ou du premier élément d'étanchéification (36) ou qui est monté sur l'un et/ou l'autre, le premier élément saillant (44) s'étendant à travers une première ouverture (26, 32) dans le bord latéral arrière (25) du volet (22), et ledit second indicateur d'usure (53) comprenant un second élément saillant (54) qui fait partie du second élément de ressort (50) et/ou du second élément d'étanchéification (46) ou est monté sur l'un et/ou l'autre, le second élément saillant (54) s'étendant à travers une seconde ouverture (27, 35) dans le bord latéral arrière (25) du volet (22).

10. Volet selon l'une quelconque des revendications 1 à 9,
ledit bord latéral arrière (25) du volet étant muni d'un premier couvercle (31) de rainure qui est amovible et couvre la première rainure (30), et ledit bord latéral arrière (25) du volet étant muni d'un second couvercle (34) de rainure qui est amovible et couvre la seconde rainure (33).

11. Volet selon la revendication 10,
ledit premier couvercle (31) de rainure étant muni d'une première ouverture (32) de couvercle de rainure pour le premier élément saillant (44) du premier indicateur d'usure (43), et ledit second couvercle (34) de rainure étant muni d'une seconde ouverture (35) de couvercle de rainure pour le second élément saillant (54) du second indicateur d'usure (53).

12. Volet selon l'une quelconque des revendications 1 à 11,
ledit premier élément d'étanchéification (36) et ledit second élément d'étanchéification (46) étant tous deux constitués de HDPE (polyéthylène haute densité).

13. Bateau (10) aéroporté comprenant une coque (12) qui est munie d'un évidement (14) de coque extérieur au fond de la coque pour un coussin d'air, l'évidement (14) de coque s'étendant dans une direction longitudinale de la coque (12), l'évidement (14) de coque étant ouvert dans une direction arrière de la coque (12) et comprenant une première paroi latérale (16) et une seconde paroi latérale (18), au moins un volet (22) selon l'une quelconque des revendications 1 à 12 étant monté dans une partie arrière (15) de l'évidement (14) de coque.

14. Bateau selon la revendication 13,
ledit évidement (14) de coque étant muni d'au moins une paroi de séparation qui s'étend dans la direction longitudinale de l'évidement (14) de coque le long d'au moins une partie de l'évidement (14) de coque et divise au moins partiellement l'évidement (14) de coque en au moins deux compartiments d'évidement de coque, et chaque compartiment d'évidement de coque étant munie d'un volet (22) qui est muni d'un premier élément d'étanchéification (36) et d'un second élément d'étanchéification (46) qui, respectivement, d'une manière étanche aux fluides, entrent en contact avec la première paroi latérale (16) ou la seconde paroi latérale (18) et une paroi de séparation ou deux parois de séparation.

15. Utilisation d'un volet (22) selon l'une quelconque des revendications 1 à 12, pour la régulation d'un coussin d'air sur un bateau (10) aéroporté.
